# EUROPÄISCHE PATENTSCHRIFT

(11) **EP 3 333 000 B1**
(45) Veröffentlichungstag und Bekanntmachung des Hinweises auf die Patenterteilung: **14.08.2019**
(21) Anmeldenummer: 17197709.3
(22) Anmeldetag: 23.10.2017
(51) Int. Cl.: B60K 17/06, B60K 7/00, B60K 17/08

(54) **ACHSANTRIEB FÜR EIN KRAFTFAHRZEUG SOWIE ACHSANTRIEBSEINRICHTUNG**
AXLE DRIVE FOR A MOTOR VEHICLE AND AXLE DRIVE DEVICE
ENTRAÎNEMENT D'ESSIEU POUR UN VÉHICULE AUTOMOBILE AINSI QUE DISPOSITIF FORMANT ENTRAÎNEMENT D'ESSIEU

(30) Priorität: 08.12.2016 DE 102016224474; 20.07.2017 DE 102017212500
(43) Veröffentlichungstag der Anmeldung: 13.06.2018
(73) Patentinhaber: AUDI AG, 85045 Ingolstadt (DE)
(72) Erfinder: Albl, Sebastian, 85080 Gaimersheim (DE); Laurijssen, Daniel, 85051 Ingolstadt (DE); Mohrlock, Dominik, 85114 Buxheim (DE); Weigelt, Sandro, 85101 Lenting (DE); Schmutz, Christoph, 85098 Demling (DE); Frommann, Patrik, 85049 Ingolstadt (DE); Hübler, Stefan, 85748 Garching (DE); Seide, Stefanie, 93339 Riedenburg (DE); Scharlach, Albert, 85129 Oberdolling (DE); Schmitz, Jürgen, 86668 Karlshuld (DE); Streicher, Michael, 85055 Ingolstadt (DE)

(56) Entgegenhaltungen:
- EP-A1- 3 138 718
- WO-A1-2016/150330
- US-A1- 2012 052 995
- US-A1- 2016 229 289

## Beschreibung

Die Erfindung betrifft einen Achsantrieb für ein Kraftfahrzeug, mit einem eine Antriebswelle aufweisenden Antriebsaggregat, wobei die Antriebswelle über eine Getriebestufe mit einer Ausgangswelle des Achsantriebs gekoppelt ist. Die Erfindung betrifft weiterhin eine Achsantriebseinrichtung.

Der Achsantrieb kann als Bestandteil des Kraftfahrzeugs Anwendung finden, insbesondere bildet er einen Bestandteil der Achsantriebseinrichtung. Der Achsantrieb dient dem Antreiben wenigstens eines Rads einer Radachse des Kraftfahrzeugs, vorzugsweise mehreren Rädern der Radachse. Mithilfe des Achsantriebs wird insoweit ein auf das Antreiben des Kraftfahrzeugs gerichtetes Drehmoment bereitgestellt oder ist zumindest bereitstellbar. Der Achsantrieb verfügt über das Antriebsaggregat, welches wiederum die Antriebswelle aufweist. An der Antriebswelle stellt das Antriebsaggregat ein Antriebsdrehmoment bereit. Die Antriebswelle kann mithin als Rotorwelle vorliegen oder als solche bezeichnet werden. Weiterhin verfügt der Achsantrieb über die Ausgangswelle, welche mit der Radachse oder dem zumindest einen Rad der Radachse koppelbar oder gekoppelt ist, vorzugsweise starr und/oder permanent.

Die Antriebswelle ist über die Getriebestufe mit der Ausgangswelle gekoppelt. Die Getriebestufe kann dabei grundsätzlich beliebig ausgestaltet sein, insbesondere in Abhängigkeit von der Ausrichtung des Antriebsaggregats beziehungsweise seiner Antriebswelle bezüglich der Ausgangswelle des Achsantriebs. So kann beispielsweise die Getriebestufe als Stirnradstufe oder als Kegelradstufe vorliegen. In erstem Fall ist die Antriebswelle im Wesentlichen parallel zu der Ausgangswelle angeordnet, in letzterem Fall sind die Antriebswelle und die Ausgangswelle gegeneinander angewinkelt oder zumindest die Ausgangswelle bezüglich einer die Antriebswelle aufnehmende gedachten Ebene angewinkelt.

Es ist Aufgabe der Erfindung, einen Achsantrieb für ein Kraftfahrzeug vorzuschlagen, welcher gegenüber bekannten Achsantrieben Vorteile aufweist, insbesondere kompakt ausgebaut und zudem modular einsetzbar ist.

Dies wird erfindungsgemäß mit einem Achsantrieb mit den Merkmalen des Anspruchs 1 erreicht. Dabei ist vorgesehen, dass die Antriebswelle über eine zu ihr versetzt angeordnete Zwischenwelle mit der Getriebestufe gekoppelt ist, wobei die Zwischenwelle auf einer ersten Seite einer eine Drehachse der Antriebswelle aufnehmenden gedachten Ebene liegt, und wobei eine Leistungselektronik auf einer der ersten Seite gegenüberliegenden zweiten Seite der Ebene stirnseitig an dem Antriebsaggregat angeordnet ist und über stirnseitig an dem Antriebsaggregat angeordnete Anschlüsse mit diesem elektrisch verbunden ist.

Die mechanische Kopplung der Antriebswelle mit der Ausgangswelle erfolgt insoweit nicht unmittelbar über die Getriebestufe. Vielmehr ist zusätzlich in der Wirkverbindung die Zwischenwelle vorgesehen. Dabei liegt die Kopplung der Antriebswelle mit der Getriebestufe über die Zwischenwelle vor, sodass im Umkehrschluss die Zwischenwelle über die Getriebestufe mit der Ausgangswelle gekoppelt ist, insbesondere starr und/oder permanent. Die Kopplung der Antriebswelle mit der Zwischenwelle kann grundsätzlich auf beliebige Art und Weise ausgestaltet sein. Beispielsweise liegt sie über eine Zwischenwellengetriebestufe vor, welche analog zu den Ausführungen für die Getriebestufe als Stirnradgetriebestufe oder als Kegelradgetriebestufe ausgestaltet sein kann.

In jedem Fall ist jedoch die Zwischenwelle versetzt zu der Antriebswelle angeordnet, sodass ihre Drehachsen nicht miteinander zusammenfallen. Im Falle der Ausgestaltung der Zwischenwellengetriebestufe als Stirnradgetriebestufe kann beispielsweise eine parallel versetzte Anordnung der Antriebswelle und der Zwischenwelle vorgehen sein. Im Falle der Kegelradgetriebestufe sind die Antriebswelle und die Zwischenwelle gegeneinander angewinkelt oder sogar windschief zueinander angeordnet.

Aufgrund der versetzten Anordnung der Zwischenwelle und der Realisierung der Wirkverbindung zwischen der Antriebswelle und der Ausgangswelle über diese Zwischenwelle wird zusätzlicher Bauraum geschaffen, welcher im Falle des hier vorgestellten Achsantriebs zur Anordnung der Leistungselektronik herangezogen wird. Die Leistungselektronik ist bevorzugt dem Antriebsaggregat zugeordnet, dient also zu dessen Betreiben. Beispielsweise ist das Antriebsaggregat hierzu als elektrische Maschine ausgestaltet, sodass entsprechend die Leistungselektronik elektrisch an das Antriebsaggregat angeschlossen ist.

Die Leistungselektronik und die Zwischenwelle sind zumindest jeweils teilweise auf gegenüberliegenden Seiten der gedachten Ebene angeordnet, wobei die gedachte Ebene die Drehachse der Antriebswelle aufnimmt. Vorzugsweise ist die Zwischenwelle vollständig auf der ersten Seite der gedachten Ebene angeordnet. Die Leistungselektronik liegt nun zumindest teilweise, vorzugsweise größtenteils oder sogar vollständig, auf der zweiten Seite der Ebene vor. Es kann jedoch vorgesehen sein, dass ein Teil der Leistungselektronik ausgehend von der zweiten Seite auf die erste Seite ragt, sodass insoweit die Leistungselektronik von der gedachten Ebene und/oder der Drehachse der Antriebswelle geschnitten wird.

Die beschriebene Ausgestaltung des Achsantriebs ermöglicht eine elektrische Konnektierung der Leistungselektronik mit dem Antriebsaggregat auf dessen Stirnseite. Unter der Stirnseite ist dabei beispielsweise eine Seite eines Maschinengehäuses des Antriebsaggregats beziehungsweise der elektrischen Maschine zu verstehen. Das Maschinengehäuse verfügt üblicherweise über wenigstens ein Lagerschild, insbesondere über zwei auf gegenüberliegenden Seiten des Antriebsaggregats vorliegende Lagerschilde, welche voneinander beabstandet sind. Die beiden Lagerschilde sind über einen Gehäusemantel miteinander verbunden, welcher zumindest im Wesentlichen zylindrisch, insbesondere Kreiszylindrisch sein kann.

Die Stirnseite liegt nun auf einer Seite des Lagerschilds oder einer Seite eines der Lagerschilde, welche dem jeweils anderen der Lagerschilde abgewandt ist, vor. Bevorzugt wird die Stirnseite von der Antriebswelle durchgriffen, insbesondere steht die Antriebswelle über die Stirnseite über. Die Stirnseite ist dabei besonders bevorzugt diejenige Stirnseite des Antriebsaggregats, welche der Zwischenwelle zugewandt ist.

Die Zwischenwelle kann grundsätzlich beliebig angeordnet sein. Besonders bevorzugt ist sie jedoch stirnseitig des Antriebsaggregats angeordnet, nämlich derart, dass sie innerhalb einer gedachten Verlängerung des Gehäusemantels angeordnet ist. Es ist also vorgesehen, dass die Zwischenwelle in radialer Richtung bezüglich der Drehachse der Antriebswelle nicht über das Antriebsaggregat beziehungsweise das Maschinengehäuse übersteht. Besonders bevorzugt gilt dies zudem für die Zwischenwellengetriebestufe, über welche die Antriebswelle mit der Zwischenwelle gekoppelt ist. Auch die Zwischenwellengetriebestufe liegt insoweit stirnseitig, vorzugsweise vollständig stirnseitig, also in radialer Richtung nicht über die Stirnseite überstehend, bezüglich des Antriebsaggregats vor.

Eine derartige Ausgestaltung des Achsantriebs ermöglicht eine Vielzahl von Konfigurationen, sodass insoweit der Achsantrieb äußerst modular aufgebaut ist. Beispielsweise kann der Achsantrieb als einziger Antrieb einer Radachse des Kraftfahrzeugs zugeordnet sein. In diesem Fall dient der Achsantrieb vorzugsweise dem Antrieb mehrerer Räder der Radachse, wobei diese Räder bevorzugt auf gegenüberliegenden Seiten des Kraftfahrzeugs vorliegen beziehungsweise unterschiedlichen Spuren des Kraftfahrzeugs zugeordnet sind.

Beispielsweise ist es in diesem Fall vorgesehen, die Ausgangswelle über ein Differentialgetriebe mit wenigstens einem Rad der Radachse oder mehreren Rädern der Radachse zu koppeln. Insbesondere ist die Ausgangswelle mit einer Eingangswelle des Differentialgetriebes verbunden, während eines der Räder mit einer ersten Ausgangswelle und ein zweites der Räder mit einer zweiten Ausgangswelle des Differentialgetriebes verbunden ist, vorzugsweise jeweils starr und/oder permanent. Bei einer derartigen Ausgestaltung ist vorzugsweise die Antriebswelle parallel oder zumindest im Wesentlichen parallel zu der Radachse angeordnet.

Alternativ kann es vorgesehen sein, den Achsantrieb zum Antreiben lediglich eines Rads des Kraftfahrzeugs beziehungsweise der Radachse des Kraftfahrzeugs heranzuziehen. In diesem Fall können für mehrere Räder der Radachse mehrere Achsantriebe herangezogen werden, wobei diese Achsantriebe vorzugsweise jeweils gemäß den Ausführungen im Rahmen dieser Beschreibung ausgestaltet sind. Vorzugsweise ist also jedem Rad der Radachse ein separater Achsantrieb zugeordnet. Bei einer derartigen Ausgestaltung sind die Antriebswellen der Achsantriebe vorzugsweise parallel zu einer Hauptfahrtrichtung des Kraftfahrzeugs beziehungsweise bezüglich der Radachse angewinkelt angeordnet. Die mehreren Achsantriebe bilden gemeinsam die vorstehend bereits erwähnte Achsantriebseinrichtung.

Von Bedeutung ist hierbei insbesondere, dass der Achsantrieb in derselben Ausgestaltung, also mit baugleichem Antriebsaggregat, baugleicher Leistungselektronik sowie baugleicher Zwischenwelle und baugleicher Zwischenwellengetriebestufe sowohl für den Antrieb mehrerer Räder der Radachse als auch des lediglich einen Rads der Radachse geeignet ist. Im ersteren Fall wird der Achsantrieb mit im Wesentlichen parallel zu der Radachse angeordnete Antriebswelle ausgerichtet, während in letzterem Fall mehrere Achsantriebe, insbesondere genau zwei Achsantriebe, derselben Bauform im Wesentlichen längs zur Hauptfahrrichtung angeordnet werden. In letzteren Fall sind die beiden Achsantriebe dabei im Wesentlichen spiegelbildlich zueinander angeordnet.

Die Erfindung betrifft weiterhin eine Achsantriebseinrichtung für ein Kraftfahrzeug, mit einem ersten Achsantrieb und einem zweiten Achsantrieb, insbesondere jeweils gemäß den vorstehenden Ausführungen, mit einem eine erste Antriebswelle aufweisenden ersten Antriebsaggregat des ersten Achsantriebs und einem eine zweite Antriebswelle aufweisenden zweiten Antriebsaggregat des zweiten Achsantriebs, wobei die erste Antriebswelle über eine erste Getriebestufe mit einer ersten Ausgangwelle der Achsantriebseinrichtung und die zweite Antriebswelle über eine zweite Getriebestufe mit einer zweiten Ausgangswelle der Achsantriebseinrichtung gekoppelt ist.

Dabei ist vorgesehen, dass das erste Antriebsaggregat und das zweite Antriebsaggregat bezüglich einer zwischen ihnen verlaufenden Symmetrieebene symmetrisch angeordnet sind, wobei die erste Antriebswelle über eine zu ihr angewinkelte, windschiefe und/oder in die von der Symmetrieebene abgewandte Richtung zu ihr versetzt angeordnete erste Zwischenwelle mit der ersten Getriebestufe und die zweite Antriebswelle über eine zu ihr angewinkelte, in die von der Symmetrieebene abgewandte Richtung zu ihr versetzt angeordnete zweite Zwischenwelle mit der zweiten Getriebestufe gekoppelt ist.

Die Achsantriebseinrichtung verfügt über zwei Achsantriebe, nämlich bevorzugt über zwei Achsantriebe jeweils gemäß den vorstehenden Ausführungen. Die beiden Antriebsaggregate sind bezüglich der Symmetrieebene symmetrisch angeordnet. Die Symmetrieebene verläuft bevorzugt parallel zu der ersten Antriebswelle und/oder der zweiten Antriebswelle beziehungsweise der jeweiligen Drehachse. Jeder Achsantrieb verfügt nun über eine Zwischenwelle, also der erste Achsantrieb über die erste Zwischenwelle und der zweite Achsantrieb über die zweite Zwischenwelle.

Die beiden Zwischenwellen sind bezüglich der jeweiligen Antriebswelle in die von der Symmetrieebene abgewandte Richtung versetzt angeordnet, beispielsweise parallel versetzt. Dies kann gemäß den vorstehenden Ausführungen jeweils mittels einer Zwischenwellengetriebestufe realisiert sein. Durch die versetzte Anordnung der Zwischenwellen bezüglich der Antriebswellen wird wiederum Bauraum geschaffen, welcher vorzugsweise, jedoch nicht notwendigerweise, für die Leistungselektronik genutzt wird.

Es kann vorgesehen sein, dass die erste Zwischenwelle zu der ersten Antriebswelle und/oder die zweite Zwischenwelle zu der zweiten Antriebswelle parallel versetzt angeordnet ist. Hierauf wurde vorstehend bereits hingewiesen. Alternativ kann die erste Zwischenwelle bezüglich der ersten Antriebswelle angewinkelt sein. Darunter ist zu verstehen, dass sich die Drehachsen der ersten Zwischenwelle und der ersten Antriebswelle schneiden, nämlich unter einem Winkel, der größer als 0° und kleiner als 180° ist. Auch eine windschiefe Anordnung der ersten Zwischenwelle und der ersten Antriebswelle kann realisiert sein. Unter der windschiefen Anordnung ist eine voneinander beabstandete, nicht parallele Anordnung der beiden Wellen zu verstehen. Diese schneiden sich also nicht und verlaufen auch nicht parallel zueinander. Die zweite Zwischenwelle und die zweite Antriebswelle sind analog angeordnet.

Bevorzugt ist es vorgesehen, dass die erste Zwischenwelle und die erste Antriebswelle einerseits sowie die zweite Zwischenwelle und die zweite Antriebswelle andererseits jeweils analog zueinander angeordnet sind. Bei einer parallelen Anordnung der beiden ersten Wellen sind insoweit auch die beiden zweiten Wellen parallel zueinander angeordnet. Bei einer angewinkelten Anordnung der ersten beiden Wellen sind auch die beiden zweiten Wellen parallel zueinander angeordnet; und bei einer windschiefen Anordnung der beiden ersten Wellen sind auch die beiden zweiten Wellen windschief zueinander angeordnet.

Zusätzlich oder alternativ kann es vorgesehen sein, dass an der ersten Ausgangswelle ein erster Ausgangsflansch zur Verbindung der ersten Ausgangswelle mit einer ersten Teilachse einer Radachse des Kraftfahrzeugs und/oder an der zweiten Ausgangswelle ein zweiter Ausgangsflansch zur Verbindung der zweiten Ausgangswelle mit einer zweiten Teilachse der Radachse vorliegt. Die beiden Ausgangsflansche dienen insoweit der Anbindung der Radachse beziehungsweise der jeweiligen Teilachse der Radachse an die Achsantriebseinrichtung. Die Ausgangsflansche sind beispielsweise derart ausgestaltet, dass das Vorliegen eines Winkelversatzes zwischen der Ausgangswelle und der jeweils mit der Ausgangswelle verbundenen Teilachse der Radachse tolerieren. Die Teilachsen können alternativ beispielsweise als Abtriebswellen bezeichnet werden.

Eine weitere bevorzugte Ausgestaltung der Erfindung sieht vor, dass die erste Getriebestufe und die zweite Getriebestufe jeweils als Kegelradgetriebestufe ausgebildet sind, sodass eine Drehachse der ersten Ausgangswelle und eine Drehachse der zweiten Ausgangswelle bezüglich der Symmetrieebene jeweils angewinkelt sind, oder dass die erste Getriebestufe und die zweite Getriebestufe jeweils als Stirnradgetriebestufe ausgebildet sind. Unter der angewinkelten Anordnung ist zu verstehen, dass zwischen den Drehachsen der beiden Ausgangswellen, also der ersten Ausgangswelle und der zweiten Ausgangswelle, und der Symmetrieebene jeweils ein Winkel vorliegt, der größer als 0° und kleiner oder gleich 90° ist. Vorzugsweise stehen die Drehachsen senkrecht auf der Symmetrieebene, sodass also der Winkel genau 90° oder zumindest näherungsweise 90° beträgt. Eine derartige Ausrichtung der Ausgangswellen wird durch die Verwendung von Kegelradgetriebestufen als erste Getriebestufe und zweite Getriebestufe erzielt.

Die erste Getriebestufe und die zweite Getriebestufe können jedoch alternativ als Stirnradgetriebestufen ausgebildet sein. Das bedeutet, dass die erste Zwischenwelle und die erste Antriebswelle parallel zueinander angeordnet sind und auch die zweite Zwischenwelle und die zweite Antriebswelle. Bei einer derartigen Ausgestaltung ist es bevorzugt vorgesehen, dass die vorstehend bereits erwähnte erste Zwischenwellengetriebestufe sowie die zweite Zwischenwellengetriebestufen jeweils bevorzugt als Kegelradgetriebestufe ausgestaltet sind, sodass wiederum die Drehachse der ersten Ausgangswelle und die Drehachse der zweiten Ausgangswelle bezüglich der Symmetrieebene jeweils angewinkelt sind, also mit dieser den Winkel einschließen, der größer als 0° und kleiner oder gleich 90° ist. Bevorzugt stehen die erste Ausgangswelle und die zweite Ausgangswelle auch bei einer derartigen Ausführungsform der Achsantriebseinrichtung senkrecht auf der Symmetrieebene oder zumindest näherungsweise senkrecht.

Eine weitere bevorzugte Ausgestaltung der Erfindung sieht vor, dass die erste Getriebestufe und die zweite Getriebestufe in einem gemeinsamen Getriebegehäuse angeordnet sind, an und/oder in welchem die beiden Ausgangswellen gelagert sind. Während selbstverständlich für die beiden Getriebestufen jeweils ein separates Getriebegehäuse vorgesehen sein kann, wobei an dem jeweiligen Getriebegehäuse auch die entsprechende Ausgangswelle gelagert sein kann, ist bevorzugt das gemeinsame Getriebegehäuse vorgesehen. In dem Getriebegehäuse sind beide Getriebestufen angeordnet, vorzugsweise vollständig. Das Getriebegehäuse dient auch der Lagerung und/oder der zumindest bereichsweisen Aufnahme der beiden Ausgangswellen.

Im Rahmen einer weiteren bevorzugten Ausführungsform der Erfindung ist vorgesehen, dass die erste Antriebswelle über eine erste Zwischenwellengetriebestufe mit der ersten Zwischenwelle und die zweite Antriebswelle über eine zweite Zwischenwellengetriebestufe mit der zweiten Zwischenwelle gekoppelt ist. Auf eine derartige Ausgestaltung wurde vorstehend bereits hingewiesen. Insoweit liegt die Wirkverbindung zwischen der Antriebswelle und der Ausgangswelle des jeweiligen Achsantriebs über die Zwischenwellengetriebestufe, die Zwischenwelle sowie die Getriebestufe vor. Dabei ist die jeweilige Antriebswelle über die entsprechende Zwischenwellengetriebestufe mit der Zwischenwelle gekoppelt, nämlich vorzugsweise starr und/oder permanent. Die Zwischenwelle wiederum ist über die Getriebestufe mit der Ausgangswelle gekoppelt, vorzugsweise ebenfalls starr und/oder permanent. Über die jeweilige Zwischenwelle ist eine starre Kopplung der Zwischenwellengetriebestufe mit der Getriebestufe vorzugsweise realisiert.

Beispielsweise sind die erste Zwischenwellengetriebestufe und die zweite Zwischenwellengetriebestufe jeweils als Stirnradgetriebestufe oder als Kegelradgetriebestufe ausgestaltet. Es liegen also entweder beide Zwischenwellengetriebestufen als Stirnradgetriebestufen oder beide Zwischenwellengetriebestufen als Kegelradgetriebestufen vor. Die Ausgestaltung als Stirnradgetriebestufe ist insbesondere vorgesehen, sofern die erste Getriebestufe und die zweite Getriebestufe in Form der Kegelradgetriebestufen vorliegen. Die Ausgestaltung als Kegelradgetriebestufen ist umgekehrt vorgesehen, sofern die beiden Getriebestufen als Stirnradgetriebestufen ausgebildet sind.

Eine Weiterbildung der Erfindung sieht vor, dass ein mit einer der Zwischenwellen drehfest verbundenes Zwischenwellengetrieberad der jeweiligen Zwischenwellengetriebestufe zumindest größtenteils, insbesondere vollständig, auf einer Seite einer die Drehachse der jeweiligen Antriebswelle aufnehmenden und zu der Symmetrieebene parallelen gedachten Ebene angeordnet ist. Das bedeutet in anderen Worten, dass mehr als die Hälfte des Zwischenwellengetrieberads auf einer Seite der gedachten Ebene vorliegt. Besonders bevorzugt liegt selbstverständlich das gesamte Zwischenwellengetrieberad auf der Seite der Ebene vor. Letzteres ist insbesondere bei der Ausgestaltung des Zwischenwellengetrieberads als Kegelrad der Fall, was bei der Ausgestaltung der Zwischengetriebestufe als Kegelradgetriebestufe zutrifft.

Die Seite, auf welcher das Zwischenwellengetrieberad zumindest größtenteils vorliegt, ist vorzugsweise die der Symmetrieebene abgewandte Seite der gedachten Ebene. Besonders bevorzugt ist das Zwischenwellengetrieberad beabstandet von der gedachten Ebene angeordnet, nämlich auf der der Symmetrieebene abgewandten Seite. Mit einer derartigen Ausgestaltung wird ein besonders großer Bauraum geschaffen, welcher anderen Zwecken zur Verfügung steht.

Eine Weiterbildung der Erfindung sieht vor, dass zwischen der ersten Getriebestufe und der zweiten Getriebestufe ein Leistungselektronikaufnahmeraum zur Aufnahme einer Leistungselektronik für das erste Antriebsaggregat und/oder das zweite Antriebsaggregat ausgebildet ist, wobei der Leistungselektronikraum wenigstens bereichsweise von dem ersten Antriebsaggregat und/oder dem zweiten Antriebsaggregat begrenzt ist. Die Leistungselektronik dient beispielsweise der Ansteuerung des ersten Antriebsaggregats und/oder des zweiten Antriebsaggregats. Beispielsweise vereint die Leistungselektronik zwei Teilleistungselektroniken, wobei eine der Teilleistungselektroniken dem ersten Antriebsaggregat und eine zweite der Teilleistungselektronik mit dem zweiten Antriebsaggregat zugeordnet ist.

Die Leistungselektronik ist in dem Leistungselektronikraum angeordnet. Dieser liegt zwischen der ersten Getriebestufe und der zweiten Getriebestufe vor, wird also vorzugsweise von einer Drehachse der ersten Ausgangswelle und einer Drehachse der zweiten Ausgangswelle geschnitten. Der Leistungselektronikbauraum erstreckt sich bis hin zu dem ersten Antriebsaggregat, zu dem zweiten Antriebsaggregat, oder - bevorzugt - zu beiden Antriebsaggregaten. Das bedeutet, dass der Leistungselektronikaufnahmeraum in axialer Richtung bezüglich der Drehachsen der Antriebswellen mit den Antriebswellen teilweise in Überdeckung vorliegt.

Eine weitere bevorzugte Ausgestaltung der Erfindung sieht vor, dass der Leistungselektronikaufnahmeraum von einem ersten Getriebeaufnahmeraum, in dem die erste Getriebestufe und/oder die erste Zwischenwellengetriebestufe angeordnet ist, und/oder von einem zweiten Getriebeaufnahmeraum, in dem die zweite Getriebestufe und/oder die zweite Zwischenwellengetriebestufe angeordnet ist, mittels einer Trennwand separiert ist. Die Achsantriebseinrichtung verfügt insoweit über den ersten Getriebeaufnahmeraum und den zweiten Getriebeaufnahmeraum, in welchem jeweils ein Getriebe beziehungsweise eine Getriebestufe angeordnet ist. So liegt in dem ersten Getriebeaufnahmeraum beispielsweise die erste Getriebestufe oder die erste Zwischenwellengetriebestufe, vorzugsweise jedoch beide, vor. Analog liegen in dem zweiten Getriebeaufnahmeraum die zweite Getriebestufe, die zweite Zwischenwellengetriebestufe oder - wiederum bevorzugt - beide vor.

Zur Abtrennung des Leistungselektronikaufnahmeraums von dem ersten Getriebeaufnahmeraum, dem zweiten Getriebeaufnahmeraum oder von beiden ist nun die Trennwand vorgesehen, wobei selbstverständlich auch mehrere Trennwände vorgesehen sein können. Der Leistungselektronikaufnahmeraum liegt in axialer Richtung bezüglich der Drehachsen der Antriebswellen gesehen vorzugsweise zumindest teilweise in Überdeckung mit den beiden Getriebeaufnahmeräumen, also dem ersten Getriebeaufnahmeraum und dem zweiten Getriebeaufnahmeraum.

Eine bevorzugte Ausgestaltung der Erfindung sieht vor, dass eine in dem Leistungselektronikaufnahmeraum angeordnete Leistungselektronik über stirnseitig an dem ersten Antriebsaggregat und/oder an dem zweiten Antriebsaggregat angeordnete Anschlüsse mit diesem/diesen elektrisch verbunden ist. Die Konnektierung der Leistungselektronik mit dem ersten Antriebsaggregat, dem zweiten Antriebsaggregat oder beiden ist insoweit stirnseitig vorgesehen. Zu diesem Zweck verfügen die Antriebsaggregate über entsprechend angeordnete Anschlüsse, vorzugsweise Steckanschlüsse.

Schließlich kann im Rahmen einer weiteren Ausgestaltung der Erfindung vorgesehen sein, dass das erste Antriebsaggregat in einem ersten Maschinengehäuse und das zweite Antriebsaggregat in einem zweiten Maschinengehäuse angeordnet ist, wobei das erste Maschinengehäuse und das zweite Maschinengehäuse unmittelbar an dem Getriebegehäuse angeordnet sind, und/oder dass das erste Antriebsaggregat und das zweite Antriebsaggregat in einem unmittelbar an dem Getriebegehäuse angeordneten gemeinsamen Maschinengehäuse angeordnet sind. In ersterem Fall sind insoweit separate Maschinengehäuse für das erste Antriebsaggregat und das zweite Antriebsaggregat, nämlich das erste Maschinengehäuse und das zweite Maschinengehäuse, vorgesehen. Die beiden Maschinengehäuse sind unmittelbar an dem Getriebegehäuse angeordnet, vorzugsweise an diesem starr befestigt. Selbstverständlich kann es auch vorgesehen sein, dass die beiden Antriebsaggregate in dem gemeinsamen Maschinengehäuse vorliegen, welches analog zu vorstehendem unmittelbar an dem Getriebegehäuse angeordnet beziehungsweise an diesem befestigt ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Achsantriebs für ein Kraftfahrzeug, welcher ein Antriebsaggregat sowie eine Ausgangswelle aufweist,
- Figur 2: eine schematische Darstellung einer ersten Ausführungsform einer Achsantriebseinrichtung für ein Kraftfahrzeug, welche über mehrere Achsantriebe verfügt, sowie
- Figur 3: eine schematische Darstellung einer zweiten Ausführungsform der Achsantriebseinrichtung.

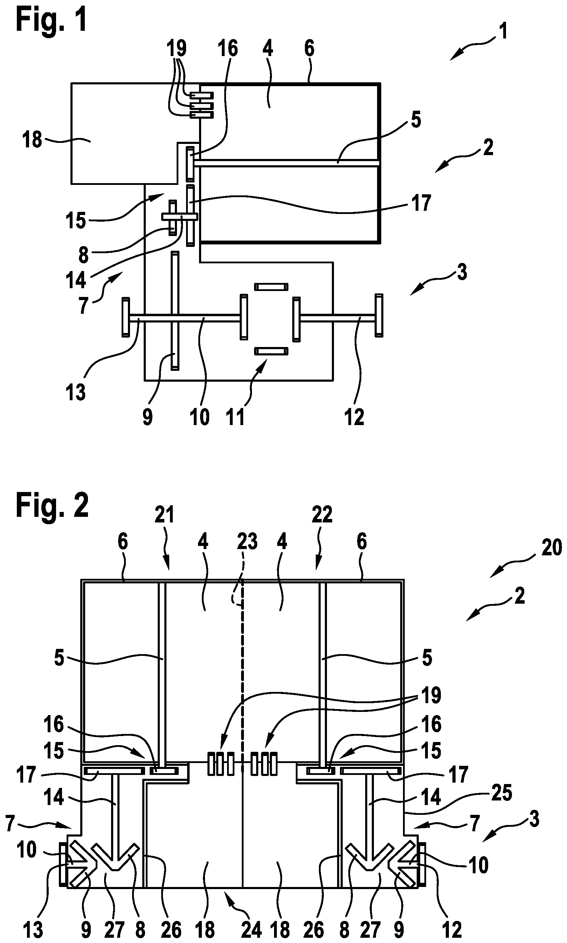

Die Figur 1 zeigt eine schematische Darstellung eines Achsantriebs 1 für ein Kraftfahrzeug 2, von welchem hier lediglich der Achsantrieb 1 sowie eine Radachse 3 angedeutet sind. Der Achsantrieb 1 verfügt über ein Antriebsaggregat 4, nämlich bevorzugt eine elektrische Maschine. Das Antriebsaggregat 4 stellt ein Antriebsdrehmoment über eine Antriebswelle 5 bereit, welche in einem Maschinengehäuse 6 des Antriebsaggregats 4 drehbar gelagert ist. Die Antriebswelle 5 ist über eine Getriebestufe 7, bestehend aus Zahnrädern 8 und 9, welche als Stirnräder ausgestaltet sind, mit einer Ausgangswelle 10 in mechanischer Wirkverbindung. Die Ausgangswelle 10 wiederum ist, bevorzugt über ein Achsdifferentialgetriebe 11, mit einer ersten Teilachse 12 und einer zweiten Teilachse 13 der Radachse 3 gekoppelt.

Der Achsantrieb 1 verfügt über eine zu der Antriebswelle 5 versetzt angeordnete Zwischenwelle 14, die über eine Zwischenwellengetriebestufe 15 mit der Antriebswelle 5 gekoppelt ist. Die Zwischenwellengetriebestufe 15 besteht vorzugsweise aus miteinander kämmenden Zahnrädern 16 und 17. Das Zahnrad 16 ist dabei auf der Antriebswelle 5 angeordnet, insbesondere starr und/oder permanent mit ihr verbunden. Das Zahnrad 17 liegt dagegen auf der Zwischenwelle 14 vor und ist vorzugsweise ebenfalls mit dieser starr und/oder permanent verbunden. Über die Zwischenwelle 14 stehen insoweit das Zahnrad 17 und das Zahnrad 8 in permanenter Wirkverbindung miteinander.

Zusammenfassend ist die Antriebswelle 5 über die zu ihr versetzt angeordnete Zwischenwelle 14 mit der Getriebestufe 7 und über diese mit der Ausgangswelle 10 mechanisch wirkverbunden. Es ist erkennbar, dass die Zwischenwelle 14 auf einer ersten Seite einer die Drehachse der Antriebswelle 5 aufnehmenden gedachten Ebene liegt. Die Ausgestaltung des Achsantriebs 1 mit der Zwischenwelle 14 ermöglicht eine besonders kompakte Ausgestaltung des Achsantriebs 1, weil eine Leistungselektronik 18 stirnseitig des Antriebsaggregats 4 angeordnet und mit diesem elektrisch verbunden werden kann.

Die elektrische Verbindung wird beispielsweise mittels hier lediglich angedeuteter Steckverbinder 19 realisiert. Diese Steckverbinder 19 stellen Anschlüsse dar, welche stirnseitig an dem Antriebsaggregat 4, insbesondere an einem Lagerschild des Maschinengehäuses 6, vorliegen. Die Leistungselektronik 8 liegt insoweit in axialer Richtung bezüglich der Drehachse der Antriebswelle 5 gesehen wenigstens bereichsweise in Überdeckung mit der Antriebswelle 5 und der Zwischenwelle 14.

Die hier dargestellte Radachse 3 kann als Vorderachse oder als Hinterachse eines zweiachsigen Kraftfahrzeugs vorliegen. Verfügt das Kraftfahrzeug 2 über mehrere Radachsen 3, so kann lediglich einer dieser Radachsen 3, einem Teil der Radachsen 3 oder aber allen Radachsen 3 jeweils ein Achsantrieb 1 der beschriebenen Ausgestaltung zugeordnet sein. Die Antriebswelle 5 des Antriebsaggregats 4 ist bei einer derartigen Ausgestaltung zumindest näherungsweise parallel zu der Radachse 3 angeordnet.

Die Figur 2 zeigt eine schematische Darstellung einer ersten Ausführungsform einer Achsantriebseinrichtung 20, welche einen ersten Achsantrieb 21 und einen zweiten Achsantrieb 22 aufweist. Jeder der Achsantriebe 21 und 22 ist weitgehend ähnlich zu dem Achsantrieb 1 aufgebaut. Von daher werden für die Achsantriebe 21 und 22 dieselben Bezugszeichen verwendet wie für den Achsantrieb 1. Auf die vorstehenden Ausführungen wird grundsätzlich Bezug genommen.

Der Unterschied zwischen den Achsantrieben 21 und 22 sowie dem Achsantrieb 1 liegen darin, dass zum einen die Antriebsaggregate 4 beziehungsweise ihre Antriebswellen 5 bezüglich der Radachse 3 angewinkelt sind. Dabei liegen die Antriebsaggregate 4 beziehungsweise die Antriebswellen 5 im Wesentlichen in Längsrichtung des Kraftfahrzeugs 2 beziehungsweise in Hauptfahrtrichtung des Kraftfahrzeugs 2 vor.

Die Getriebestufe 7 besteht zwar weiterhin aus Zahnrädern 8 und 9, diese sind jedoch nicht als Stirnräder, sondern als Tellerräder ausgestaltet. Auch verfügt jeder Achsentrieb 21 und 22 über eine eigene Ausgangswelle 10, wobei jede der Ausgangswellen 10 an eine der Teilachsen 12 und 13 drehmomentübertragend angebunden ist. Insoweit ist mithilfe der Achsantriebseinrichtung 20 ein Einzelradantrieb für die Radachse 3 realisiert.

Es ist erkennbar, dass die beiden Antriebsaggregate 4 bezüglich einer zwischen ihnen verlaufenden Symmetrieebene 23 symmetrisch angeordnet sind. Die Zwischenwellen 14 der beiden Achsantriebe 21 und 22 sind jeweils in die von der Symmetrieebene 23 abgewandte Richtung zu der entsprechenden Antriebswelle 5 versetzt angeordnet. Mithilfe einer derartigen Ausgestaltung der Achsantriebseinrichtung 20 wird zwischen den Getriebestufen 7 ein Leistungselektronikaufnahmeraum 24 für die Leistungselektronik 18 geschaffen.

Dieser Leistungselektronikaufnahmeraum 24 wird in axialer Richtung zumindest bereichsweise von den Antriebsaggregaten 4 begrenzt. Entsprechend kann die Konnektierung der Leistungselektronik 18 an die Antriebsaggregate 4 über die dem Leistungselektronikaufnahmeraum 24 zugewandten Stirnseiten der Maschinengehäuse 6 erfolgen. Bevorzugt sind die beiden Getriebestufen 7 in einem gemeinsamen Getriebegehäuse 25 angeordnet, an und/oder in welchem auch die Ausgangswellen 10 gelagert sind.

Der Leistungselektronikaufnahmeraum 24 kann ebenso in dem Getriebegehäuse 25 vorliegen. Bevorzugt ist er dabei mittels wenigstens einer Trennwand 26, in dem hier dargestellten Ausführungsbeispiel zwei Trennwänden 26, von Getriebeaufnahmeräumen 27 abgegrenzt beziehungsweise separiert, wobei in den Getriebeaufnahmeräumen 27 die Getriebestufen 7 und/oder die Zwischenwellengetriebestufen 15 angeordnet sind.

Es kann - wie hier dargestellt - jedes der Antriebsaggregate 4 in einem separaten Maschinengehäuse 6 angeordnet sein. In diesem Fall sind beide Maschinengehäuse 6 vorzugsweise mit dem Getriebegehäuse 25 verbunden beziehungsweise an diesem befestigt, beispielsweise mittels Schraubverbindungen. Alternativ kann es vorgesehen sein, dass die beiden Antriebsaggregate 4 in einem gemeinsamen Maschinengehäuse 6 vorliegen, welches dann ebenfalls mit dem Getriebegehäuse 25 verbunden beziehungsweise an diesem befestigt ist.

Insoweit ergibt sich eine Achsantriebseinrichtung 20, bei welcher ein einziges Getriebegehäuse 25 vorliegt, an welchem die Antriebsaggregate 4 befestigt sind. In dem Getriebegehäuse 25 sind die den Antriebsaggregaten 4 zugeordneten Getriebestufen angeordnet, welche der Herstellung der Wirkverbindungen zwischen den Antriebswellen 5 und den Ausgangswellen 10 dienen. Insgesamt wird so eine äußerst kompakte Ausgestaltung der Achsantriebseinrichtung 20 erzielt, bei welcher auch die Leistungselektroniken 18 durch ihre Aufnahme in dem Getriebegehäuse 25 platzsparend angeordnet sind.

Es ist zudem erkennbar, dass die beiden Achsantriebe 21 und 22, welche Bestandteil der Achsantriebseinrichtung 20 sind, zahlreiche Gleichteile aufweisen, insbesondere auch mit dem vorstehend beschriebenen Achsantrieb 1. Insoweit ist ein äußerst modularer Aufbau aus zahlreichen Gleichteilen realisiert, sodass der Achsantrieb 1 beziehungsweise die Achsantriebseinrichtung 20 für zahlreiche Antriebskonfigurationen des Kraftfahrzeugs 2 herangezogen werden kann. Die Radachse 3, welcher die Achsantriebseinrichtung 20 zugeordnet ist, kann wiederum als Vorderachse oder als Hinterachse des Kraftfahrzeugs vorliegen. Vorzugsweise ist sowohl der Vorderachse als auch der Hinterachse jeweils eine derartige Achsantriebseinrichtung 20 zugeordnet.

Aufgrund der Ausrichtung der Antriebsaggregate 4 in Längsrichtung beziehungsweise Hauptfahrtrichtung des Kraftfahrzeugs 2 kann eine beliebige Skalierung der Antriebsaggregate 4 in Abhängigkeit von dem Leistungsbedarf des Kraftfahrzeugs 2 vorgenommen werden. So können beispielsweise für eine schwächere Ausführungsform der Achsantriebseinrichtung 20 in Längsrichtung kürzer bauende Antriebsaggregate 4 verwendet werden, wohingegen die Antriebsaggregate 4 für eine leistungsstärkere Achsantriebseinrichtung 20 in Längsrichtung länger bauen, sodass insgesamt ein Baukastensystem realisiert ist.

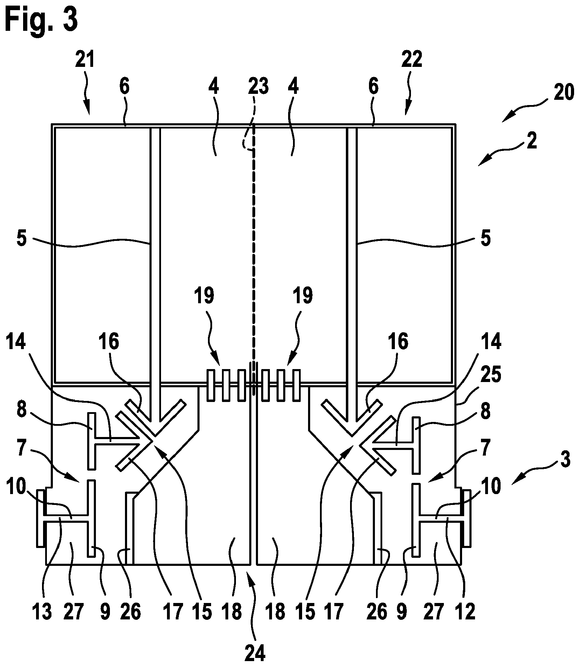

Die Figur 3 zeigt eine schematische Darstellung einer zweiten Ausführungsform der Achsantriebseinrichtung 20, wiederum mit dem ersten Achsantrieb 21 und dem zweiten Achsantrieb 22. Hinsichtlich der Achsantriebe 21 und 22 wird auf den Achsantrieb 1 verwiesen. Erneut werden für die Achsantriebe 21 und 22 dieselben Bezugszeichen verwendet wie für den Achsantrieb 1. Die zweite Ausführungsform der Achsantriebseinrichtung 20 ist ähnlich zu der ersten Ausführungsform aufgebaut. Auf die vorstehenden Ausführungen wird daher Bezug genommen und nachfolgend lediglich auf die Unterschiede hingewiesen. Diese liegen darin, dass die Getriebestufe 7 analog zu dem Achsantrieb 1 Stirnräder aufweist und nicht etwa Tellerräder, wie dies für die erste Ausführungsform der Fall ist. Hingegen sind die Zahnräder 16 und 17 der Zwischenwellengetriebestufen 15 jeweils als Tellerräder ausgestaltet, sodass insoweit die Zwischenwellengetriebestufen 15 als Tellerradgetriebestufen vorliegen.

Bei einer derartigen Ausgestaltung der Achsantriebseinrichtung 20 ergibt sich eine leicht unterschiedliche Form des Leistungselektronikaufnahmeraums 24, welche im Wesentlichen durch die Ausgestaltung der Zwischenwellengetriebestufen 15 als Tellerradgetriebestufen bedingt ist.

## Patentansprüche

1. Achsantrieb (1) für ein Kraftfahrzeug (2), mit einem eine Antriebswelle (5) aufweisenden Antriebsaggregat (4), wobei die Antriebswelle (5) über eine Getriebestufe (7) mit einer Ausgangswelle (10) des Achsantriebs (1) gekoppelt ist, wobei die Antriebswelle (5) über eine zu ihr versetzt angeordnete Zwischenwelle (14) mit der Getriebestufe (7) gekoppelt ist, und wobei die Zwischenwelle (14) auf einer ersten Seite einer eine Drehachse der Antriebswelle (5) aufnehmenden gedachten Ebene liegt, **dadurch gekennzeichnet, dass** eine Leistungselektronik (18) auf einer der ersten Seite gegenüberliegenden zweiten Seite der Ebene stirnseitig an dem Antriebsaggregat (4) angeordnet ist und über stirnseitig an dem Antriebsaggregat (4) angeordnete Anschlüsse (19) mit diesem elektrisch verbunden ist.

2. Achsantriebseinrichtung (20) für ein Kraftfahrzeug (2), mit einem ersten Achsantrieb (21) und einem zweiten Achsantrieb (22), jeweils nach Anspruch 1, mit einem eine erste Antriebswelle (5) aufweisenden ersten Antriebsaggregat (4) des ersten Achsantriebs (21) und einem eine zweite Antriebswelle (5) aufweisenden zweiten Antriebsaggregat (4) des zweiten Achsantriebs (22), wobei die erste Antriebswelle (5) über eine erste Getriebestufe (7) mit einer ersten Ausgangswelle (10) der Achsantriebseinrichtung (20) und die zweite Antriebswelle (5) über eine zweite Getriebestufe (7) mit einer zweiten Ausgangswelle (10) der Achsantriebseinrichtung (20) gekoppelt ist, **dadurch gekennzeichnet, dass** das erste Antriebsaggregat (4) und das zweite Antriebsaggregat (4) bezüglich einer zwischen ihnen verlaufenden Symmetrieebene (23) symmetrisch angeordnet sind, wobei eine erste Leistungselektronik (18) stirnseitig an dem ersten Antriebsaggregat (4) und eine zweite Leistungselektronik (18) stirnseitig an dem zweiten Antriebsaggregat (4) angeordnet ist, wobei die erste Antriebswelle (5) über eine zu ihr angewinkelte, windschiefe und/oder in die von der Symmetrieebene (23) abgewandte Richtung zu ihr versetzt angeordnete erste Zwischenwelle (14) mit der ersten Getriebestufe (7) und die zweite Antriebswelle (5) über eine zu ihr angewinkelte, windschiefe und/oder in die von der Symmetrieebene (23) abgewandte Richtung zu ihr versetzt angeordnete zweite Zwischenwelle (14) mit der zweiten Getriebestufe (7) gekoppelt ist.

3. Achsantriebseinrichtung nach Anspruch 2, **dadurch gekennzeichnet, dass** die erste Getriebestufe (7) und die zweite Getriebestufe (7) jeweils als Kegelradgetriebestufe ausgebildet sind, sodass eine Drehachse der ersten Ausgangswelle (10) und eine Drehachse der zweiten Ausgangswelle (10) bezüglich der Symmetrieebene (23) jeweils angewinkelt sind, oder dass die erste Getriebestufe (7) und die zweite Getriebestufe (7) jeweils als Stirnradgetriebestufe ausgebildet sind.

4. Achsantriebseinrichtung nach einem der vorhergehenden Ansprüche, **dadurch gekennzeichnet, dass** die erste Getriebestufe (7) und die zweite Getriebestufe (7) in einem gemeinsamen Getriebegehäuse (25) angeordnet sind, an und/oder in welchem die beiden Ausgangswellen (10) gelagert sind.

5. Achsantriebseinrichtung nach einem der vorhergehenden Ansprüche, **dadurch gekennzeichnet, dass** die erste Antriebswelle (5) über eine erste Zwischenwellengetriebestufe (15) mit der ersten Zwischenwelle (14) und die zweite Antriebswelle (5) über eine zweite Zwischenwellengetriebestufe (15) mit der zweiten Zwischenwelle (14) gekoppelt ist.

6. Achsantriebseinrichtung nach einem der vorhergehenden Ansprüche, **dadurch gekennzeichnet, dass** ein mit einer der Zwischenwellen (14) drehfest verbundenes Zwischenwellengetrieberad (16) der jeweiligen Zwischenwellengetriebestufe (15) zumindest größtenteils, insbesondere vollständig, auf einer Seite einer die Drehachse der jeweiligen Antriebswelle (5) aufnehmenden und zu der Symmetrieebene (23) parallelen gedachten Ebene angeordnet ist.

7. Achsantriebseinrichtung nach einem der vorhergehenden Ansprüche, **dadurch gekennzeichnet, dass** zwischen der ersten Getriebestufe (7) und der zweiten Getriebestufe (7) ein Leistungselektronikaufnahmeraum (24) zur Aufnahme einer Leistungselektronik (18) für das erste Antriebsaggregat (4) und/oder das zweite Antriebsaggregat (4) ausgebildet ist, wobei der Leistungselektronikaufnahmeraum (24) wenigstens bereichsweise von dem ersten Antriebsaggregat (4) und/oder dem zweiten Antriebsaggregat (4) begrenzt ist.

8. Achsantriebseinrichtung nach einem der vorhergehenden Ansprüche, **dadurch gekennzeichnet, dass** der Leistungselektronikaufnahmeraum (24) von einem ersten Getriebeaufnahmeraum (27), in dem die erste Getriebestufe (7) und/oder die erste Zwischenwellengetriebestufe (15) angeordnet ist, und/oder von einem zweiten Getriebeaufnahmeraum (27), in dem die zweite Getriebestufe (7) und/oder die zweite Zwischenwellengetriebestufe (15) angeordnet ist, mittels einer Trennwand (26) separiert ist.

9. Achsantriebseinrichtung nach einem der vorhergehenden Ansprüche, **dadurch gekennzeichnet, dass** eine in dem Leistungselektronikaufnahmeraum (24) angeordnete Leistungselektronik (18) über stirnseitig an dem ersten Antriebsaggregat (4) und/oder dem zweiten Antriebsaggregat (4) angeordnete Anschlüsse (19) mit diesem/diesen elektrisch verbunden ist.

10. Achsantriebseinrichtung nach einem der vorhergehenden Ansprüche, **dadurch gekennzeichnet, dass** das erste Antriebsaggregat (4) in einem ersten Maschinengehäuse (6) und das zweite Antriebsaggregat (4) in einem zweiten Maschinengehäuse (6) angeordnet ist, wobei das erste Maschinengehäuse (6) und das zweite Maschinengehäuse (6) unmittelbar an dem Getriebegehäuse (25) angeordnet sind, und/oder dass das erste Antriebsaggregat (4) und das zweite Antriebsaggregat (4) in einem unmittelbar an dem Getriebegehäuse (25) angeordneten gemeinsamen Maschinengehäuse angeordnet sind.

## Claims

1. Final drive (1) for a motor vehicle (2) comprising a drive assembly (4) having a drive shaft (5), wherein the drive shaft (5) is coupled via a gear stage (7) to an output shaft (10) of the final drive (1), wherein the drive shaft (5) is coupled to the gear stage (7) via an intermediate shaft (14) that is arranged offset with respect to it, and wherein the intermediate shaft (14) lies on a first side of a conceptual plane incorporating an axis of rotation of the drive shaft (5), **characterised in that** a power electronics unit (18) is arranged on the drive assembly (4) at the front end thereof on a second side of the plane, which lies opposite to the first side, and is electrically connected to the drive assembly (4) via connection terminals (19) arranged at the front end thereof.

2. Final drive device (20) for a motor vehicle (2) comprising a first final drive (21) and a second final drive (22), each according to claim 1, with a first drive assembly (4) of the first final drive (21) having a first drive shaft (5) and a second drive assembly (4) of the second final drive (22) having a second drive shaft (5), wherein the first drive shaft (5) is coupled via a first gear stage (7) to a first output shaft (10) of the final drive device (20) and the second drive shaft (5) is coupled via a second gear stage (7) to a second output shaft (10) of the final drive device (20), **characterised in that** the first drive assembly (4) and the second drive assembly (4) are arranged symmetrically with respect to a plane of symmetry (23) running between them, wherein a first power electronics unit (18) is arranged on the first drive assembly (4) at the front end thereof and a second power electronics unit (18) is arranged on the second drive assembly (4) at the front end thereof, wherein the first drive shaft (5) is coupled to the first gear stage (7) via a first intermediate shaft (14), which is at an angle with respect to it, skewed with respect to it and/or offset with respect to it in the direction facing away from the plane of symmetry (23), and the second drive shaft (5) is coupled to the second gear stage (7) via a second intermediate shaft (14), which is arranged at an angle with respect to it, skewed with respect to it and/or offset with respect to it in the direction facing away from the plane of symmetry (23).

3. Final drive device according to claim 2, **characterised in that** the first gear stage (7) and the second gear stage (7) are each designed as a bevel gear stage, so that an axis of rotation of the first output shaft (10) and an axis of rotation of the second output shaft (10) are each at an angle with respect to the plane of symmetry (23) or the first gear stage (7) and the second gear stage (7) are each designed as a spur gear stage.

4. Final drive device according to any of the preceding claims, **characterised in that** the first gear stage (7) and the second gear stage (7) are arranged in a common gear housing (25) on and/or in which the two output shafts (10) are mounted.

5. Final drive device according to any of the preceding claims, **characterised in that** the first drive shaft (5) is coupled to the first intermediate shaft (14) via a first intermediate-shaft gear stage (15) and the second drive shaft (5) is coupled to the second intermediate shaft (14) via a second intermediate-shaft gear stage (15).

6. Final drive device according to any of the preceding claims, **characterised in that** an intermediate-shaft gear wheel (16) of the respective intermediate-shaft gear stage (15), which is connected to one of the intermediate shafts (14) in a rotationally-resistant manner, is arranged at least for the most part, in particular completely, on one side of a conceptual plane that incorporates the axis of rotation of the respective drive shaft (5) and is arranged parallel to the plane of symmetry (23).

7. Final drive device according to any of the preceding claims, **characterised in that** between the first gear stage (7) and the second gear stage (7), a power electronics unit mounting compartment (24) is formed for the mounting of a power electronics unit (18) for the first drive assembly (4) and/or the second drive assembly (4), wherein at least portions of the power electronics unit mounting compartment(24) are delimited by the first drive assembly (4) and/or the second drive assembly (4).

8. Final drive device according to any of the preceding claims, **characterised in that** the power electronics unit mounting compartment (24) is separated from a first gearbox mounting compartment (27), in which the first gear stage (7) and/or the first intermediate-shaft gear stage (15) are arranged, and/or from a second gearbox mounting compartment (27), in which the second gear stage (7) and/or the second intermediate-shaft gear stage (15) are arranged, by a dividing wall (26).

9. Final drive device according to any of the preceding claims, **characterised in that** a power electronics unit (18), which is arranged in the power electronics unit mounting compartment (24), is electrically connected via connection terminals (19) arranged at the front end at the first drive assembly (4) and/or the second drive assembly (4).

10. Final drive device according to any of the preceding claims, **characterised in that** the first drive assembly (4) is arranged in a first motor housing (6) and the second drive assembly (4) is arranged in a second motor housing (6), wherein the first motor housing (6) and the second motor housing (6) are arranged directly at the gear housing (25), and/or **in that** the first drive assembly (4) and the second drive assembly (4) are arranged in a common motor housing arranged directly at the gear housing (25).

## Revendications

1. Entraînement d'essieu (1) pour un véhicule automobile (2) avec un groupe d'entraînement (4) présentant un arbre d'entraînement (5), dans lequel l'arbre d'entraînement (5) est couplé par le biais d'une boîte de transmission (7) à un arbre de sortie (10) de l'entraînement d'essieu (1), dans lequel l'arbre d'entraînement (5) est couplé par le biais d'un arbre intermédiaire (14) agencé en déport de celui-ci à la boîte de transmission (7), et dans lequel l'arbre intermédiaire (14) se trouve sur un premier côté d'un plan imaginaire recevant un axe de rotation de l'arbre d'entraînement (5), **caractérisé en ce qu'**une électronique de puissance (18) est agencée sur un second côté opposé au premier côté du plan côté avant sur le groupe d'entraînement (4) et est électriquement liée à celui-ci par le biais de bornes (19) agencées côté avant au niveau du groupe d'entraînement (4).

2. Dispositif d'entraînement d'essieu (20) pour un véhicule automobile (2), avec un premier entraînement d'essieu (21) et un second entraînement d'essieu (22), respectivement selon la revendication 1, avec un premier groupe d'entraînement (4) présentant un premier arbre d'entraînement (5) du premier entraînement d'essieu (21) et un second groupe d'entraînement (4) présentant un second arbre d'entraînement (5) du second entraînement d'essieu (22), dans lequel le premier arbre d'entraînement (5) est couplé par le biais d'une première boîte de transmission (7) à un premier arbre de sortie (10) du dispositif d'entraînement d'essieu (20) et le second arbre d'entraînement (5) est couplé par le biais d'une seconde boîte de transmission (7) à un second arbre de sortie (10) du dispositif d'entraînement d'essieu (20), **caractérisé en ce que** le premier groupe d'entraînement (4) et le second groupe d'entraînement (4) sont agencés de manière symétrique par rapport à un plan de symétrie (23) s'étendant entre eux, dans lequel une première électronique de puissance (18) est agencée côté avant au niveau du premier groupe d'entraînement (4) et une seconde électronique de puissance (18) est agencée côté avant au niveau du second groupe d'entraînement (4), dans lequel le premier arbre d'entraînement (5) est couplé par le biais d'un premier arbre intermédiaire (14) plié par rapport à lui, gauchi et/ou agencé en déport dans la direction éloignée du plan de symétrie (23) par rapport à celui-ci, à la première boîte de transmission (7) et le second arbre d'entraînement (5) est couplé par le biais d'un second arbre intermédiaire (14) plié par rapport à celui-ci, gauchi et/ou agencé en déport dans la direction éloignée du plan de symétrie (23) par rapport à celui-ci, à la seconde boîte de transmission (7).

3. Dispositif d'entraînement d'essieu selon la revendication 2, **caractérisé en ce que** la première boîte de transmission (7) et la seconde boîte de transmission (7) sont réalisées respectivement comme boîte de transmission à roue conique de sorte qu'un axe de rotation du premier arbre de sortie (10) et un axe de rotation du second arbre de sortie (10) soient pliés par rapport au plan de symétrie (23) respectivement, ou que la première boîte de transmission (7) et la seconde boîte de transmission (7) sont réalisées respectivement comme boîte de transmission à roue avant.

4. Dispositif d'entraînement d'essieu selon l'une quelconque des revendications précédentes, **caractérisé en ce que** la première boîte de transmission (7) et la seconde boîte de transmission (7) sont agencées dans un boîtier d'engrenage (25) commun, au niveau duquel et/ou dans lequel sont logés les deux arbres de sortie (10).

5. Dispositif d'entraînement d'essieu selon l'une quelconque des revendications précédentes, **caractérisé en ce que** le premier arbre d'entraînement (5) est couplé par le biais d'une première boîte de transmission d'arbre intermédiaire (15) au premier arbre intermédiaire (14) et le second arbre d'entraînement (5) est couplé par le biais d'une seconde boîte de transmission d'arbre intermédiaire (15) au second arbre intermédiaire (14).

6. Dispositif d'entraînement d'essieu selon l'une quelconque des revendications précédentes, **caractérisé en ce qu'**une roue d'engrenage d'arbre intermédiaire (16) liée sans pouvoir tourner à un des arbres intermédiaires (14) de la boîte de transmission d'arbre intermédiaire (15) respectif est agencée au moins pour la plus grande partie, en particulier complètement, sur un côté d'un plan imaginaire parallèle au plan de symétrie (23) et recevant l'axe de rotation de l'arbre d'entraînement (5) respectif.

7. Dispositif d'entraînement d'essieu selon l'une quelconque des revendications précédentes, **caractérisé en ce qu'**entre la première boîte de transmission (7) et la seconde boîte de transmission (7) un espace de logement d'électronique de puissance (24) est réalisé pour le logement d'une électronique de puissance (18) pour le premier groupe d'entraînement (4) et/ou le second groupe d'entraînement (4), dans lequel l'espace de logement d'électronique de puissance (24) est délimité au moins par endroits par le premier groupe d'entraînement (4) et/ou le second groupe d'entraînement (4).

8. Dispositif d'entraînement d'essieu selon l'une quelconque des revendications précédentes, **caractérisé en ce que** l'espace de logement d'électronique de puissance (24) est séparé d'un premier espace de logement d'engrenage (27) dans lequel la première boîte de transmission (7) et/ou la première boîte de transmission d'arbre intermédiaire (15) est agencée, et/ou d'un second espace de logement d'engrenage (27) dans lequel la seconde boîte de transmission (7) et/ou la seconde boîte de transmission d'arbre intermédiaire (15) est agencée, au moyen d'une paroi de séparation (26).

9. Dispositif d'entraînement d'essieu selon l'une quelconque des revendications précédentes, **caractérisé en ce qu'**une électronique de puissance (18) agencée dans l'espace de logement d'électronique de puissance (24) est électriquement liée par le biais de bornes (19) agencées côté avant au niveau du premier groupe d'entraînement (4) et/ou du second groupe d'entraînement (4) à celui-ci/ceux-ci.

10. Dispositif d'entraînement d'essieu selon l'une quelconque des revendications précédentes, **caractérisé en ce que** le premier groupe d'entraînement (4) est agencé dans un premier boîtier de machine (6) et le second groupe d'entraînement (4) est agencé dans un second boîtier de machine (6), dans lequel le premier boîtier de machine (6) et le second boîtier de machine (6) sont agencés directement au niveau du boîtier d'engrenage (25), et/ou que le premier groupe d'entraînement (4) et le second groupe d'entraînement (4) sont agencés dans un boîtier de machine commun agencé directement au niveau du boîtier d'engrenage (25).
